# EUROPÄISCHE PATENTANMELDUNG

(11) **EP 0 898 177 A2**
(43) Veröffentlichungstag der Anmeldung: **24.02.1999**
(21) Anmeldenummer: 98108667.1
(22) Anmeldetag: 13.05.1998
(51) Int. Cl.: G01S 15/04

(54) **Ultraschall-Sensormodul**

(30) Priorität: 15.08.1997 DE 19735423
(71) Anmelder: f+g megamos Sicherheitselektronik GmbH, 51674 Wiehl (DE)
(72) Erfinder: Menne, Roland, 57462 Olpe (DE)
(74) Vertreter: Cohausz & Florack

(57) **Zusammenfassung**

Die Erfindung betrifft eine Ultraschall-Überwachungseinrichtung zum Überwachen eines Kfz-Innenraums bestehend aus mindestens zwei Sende- (S1, S2) und mindestens zwei Empfängerelementen (E1, E2) sowie einer Signalverarbeitungselektronik zur Ansteuerung der Sende- und Empfangselemente (S1, S2, E1, E2) und zur Auswertung der vom Innenraum reflektierten Signale, wobei die Sende- und Empfangselemente (S1, S2, E1, E2) jeweils im Bereich von B-Holmen des Kraftfahrzeuges angeordnet sind und die signaltechnisch einander zugeordneten Sende-(S1, S2) bzw. Empfangselemente (E1, E2) jeweils auf unterschiedlichen B-Holmen liegen. Zur Herabsetzung der Kosten der Ultraschall-Überwachungseinrichtung ist vorgesehen, daß die mindestens zwei Empfangselemente (E1, E2) sowie die Signalverarbeitungselektronik zu einer baulichen Einheit zusammengefaßt sind.

## Beschreibung

Die Erfindung betrifft eine Ultraschall-Überwachungseinrichtung zum Überwachen eines Kfz-Innenraums bestehend aus mindestens zwei Sende- und mindestens zwei Empfangselementen sowie einer Signalverarbeitungselektronik zur Ansteuerung der Sende- und Empfangselemente und zur Auswertung der vom Innenraum reflektierten Signale, wobei die Sende- und Empfangselemente jeweils im Bereich von B-Holmen des Kraftfahrzeuges angeordnet sind und die signaltechnisch einander zugeordneten Sende- bzw. Empfangselemente jeweils auf unterschiedlichen B-Holmen liegen

Eine Vorrichtung dieser Art ist aus der EP 0 541 565 bekannt. Bei dieser bekannten Einrichtung sind die Sendeelemente und die Empfangselemente jeweils an der oder nahe der Innenoberfläche des Kfz-Daches, und zwar jeweils mehr oder weniger im Bereich der sog. B-Holme, also im Bereich der zwischen den vorderen großen Seitenscheiben und den hinteren großen Seitenscheiben liegenden Holmen angebracht. Die Hauptachsen der Hauptkeulen der Richtcharakteristiken der Sende- bzw. Empfangselemente sind so justiert, daß das eine Sendeelement auf dem einen B-Holm mit einem gegenüberliegenden Empfangselement in einem B-Holm zusammenwirkt. Dieses Sender-Empfängerpaar überwacht beispielsweise bevorzugt die alarmrelevanten Bereiche der vorderen Hälfte des Kfz-Innenraumes, zum Beispiel die scheibennahen vorderen Kfz-Bereiche.

Das zweite Sendeelement überwacht zusammen mit dem gegenüberliegenden zweiten Empfangselement bevorzugt die alarmrelevanten Bereiche der hinterern Hälfte des Kfz-Innenraumes, z.B. die scheibennahen hinteren Kfz-Bereiche. Bei dieser bekannten Lösung beinhaltet ein am selben B-Holm angordnetes Sensormodul stets mindestens einen Sender und mindestens einen Empfänger. Die Steuerung einer solchen Anordnung erfolgt über die Signalverarbeitungselektronik, welche sowohl die Beaufschlagung der Sendeelemente mit Ultraschallimpulsen steuert als auch ausgehend von dem von den Empfängern erfaßten reflektierten Signal eine Auswertung und Bewertung hinsichtlich einer Alarmgebung vornimmt. Bei der bekannten Anordnung muß jeweils in jedem Sensormodul eine entsprechende Signalverarbeitungselektronik vorgesehen sein, um die komplette Sender- bzw. Empfängerfunktion zu realisieren. Dies stellt sowohl schaltungstechnisch einen hohen Aufwand dar und ist darüber hinaus auch hinsichtlich des Einbaus aufwendig, weil auf beiden Seiten der B-Holme Platzbedarf für die Signalverarbeitungselektronik erforderlich ist und eine entsprechende Verkabelung vorgenommen werden muß.

Davon ausgehend liegt der Erfindung die Aufgabe zugrunde, eine Vorrichtung der eingangs genannten Art dahingehend weiterzuentwickeln, daß der Herstellungs- und Einbauaufwand reduziert wird.

Diese Aufgabe wird erfindungsgemäß dadurch gelöst, daß die mindestens zwei Empfangselemente mit der empfangrelevanten Signalverarbeitungselektronik zu einer baulichen Einheit zusammengefaßt sind.

Die erfindungsgemäße Lösung beinhaltet, daß durch die bauliche Zusammenfassung der Empfangselemente der maßgebliche Teil der Signalverarbeitungselektronik, d.h. die für die Auswertung des reflektierten, empfangenen Signals zuständigen Baugruppen nurmehr einfach ausgelegt sein können. Dieser Teil der Signalverarbeitungselektronik kann nämlich für beide Empfangselemente dienen, was durch entsprechende Taktung bzw. Multiplexbetrieb ermöglicht wird. Gegenüber dem Stand der Technik ist dies deswegen ein erheblicher Fortschritt, weil in der Ultraschall-Überwachungseinrichtung nunmehr der kostenträchtige Teil der Signalverarbeitungselektronik auf der Empfängerseite in einer Einheit zusammengefaßt ist. Demgegenüber ist der Elektronikaufwand für die senderrelevante Signalverarbeitungselektronik deutlich geringer.

Gemäß der bevorzugten Gestaltung der Erfindung können aber auch die beiden Senderelemente in einer weiteren baulichen Einheit zusammengefaßt sein, so daß die senderrelevante, also für diese Sendeelemente wirkende, Ansteuerelektronik ebenfalls beide Sendeelemente gemeinsam ansteuert.

Weitere bevozugte Ausführungsformen gehen aus den weiteren Unteransprüchen hervor.

Die Erfindung wird im folgenden anhand eines Ausführungsbeispiels näher erläutert.

Dabei zeigen
- Fig. 1: die Draufsicht auf einen Kfz-Innenraum mit einer Anordnung der Sende- und Empfangselemente, wie sie aus dem Stand der Technik bekannt ist und
- Fig. 2: die Draufsicht auf einen Kfz-Innenraum mit einer Anordnung der Sende- und Empfangselemente gemäß Ausführungsbeispiel der Erfindung.

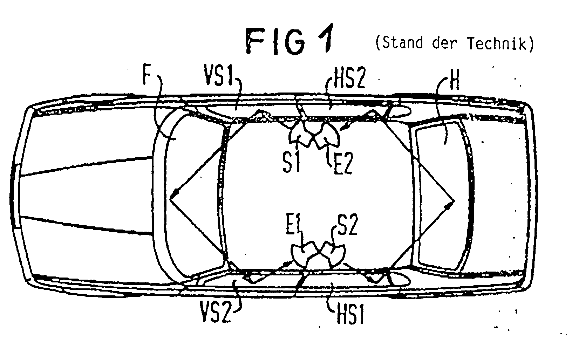

Fig. 1 entspricht der Anordnung gemäß EP 0 541 565. Der Kfz-Innenraum wird begrenzt durch die Frontscheibe F, die vorderen Seitenscheiben VS1, VS2, die hinteren Seitenscheiben HS1, HS2 und die Heckscheibe H. In beiden B-Holmbereichen befinden sich Sender-/Empfängerpaare S1, E2 bzw. E1, S2 einer Ultraschall-Überwachungseinrichtung. Die in Fig. 1 dargestellten Pfeile erläutern, daß das Sender-/Empfängerpaar S1, E1 den vorderen Bereich des Kfz-Innenraumes abdeckt, während das Sender-/Empfängerpaar S2, E2 den hinteren Bereich überstreicht. Jeder der beiden Sender-/Empfängerpaare S1, E2 bzw. E1, S2 muß dazu eine entsprechende Signalverarbeitungselektronik enthalten.

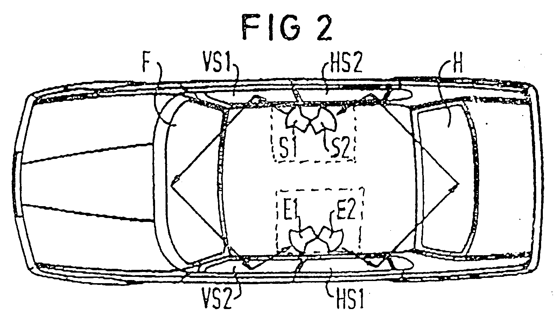

Fig. 2 zeigt eine Anordnung der Sender-/Empfängerpaare gemäß Ausführungsbeispiel der Erfindung. Auch hier ist das erste Sender-/Empfängerpaar dem vorderen Innenraumbereich und das zweite Sender-/Empfängerpaar S2, E2 dem hinteren Innenraumbereich zugeordnet.

Allerdings sind die Sendereinheiten S1, S2 und auch die Empfängereinheiten E1, E2 räumlich zusammengefaßt. Der für den Empfang zuständige Teil der Signalverarbeitungselektronik S ist nur an dem Einbauort der Empfänger E1, E2 vorhanden. Auf der Seite der Senderpaare S1, S2, also am gegenüberliegenden B-Holm, ist der Teil der Signalverarbeitungselektronik untergebracht, der für die Ansteuerung der Sender S1, S2 zuständig ist.

Da der Teil der Signalverarbeitungselektronik, der mit den Empfängerelementen E1, E2 zusammenwirkt, wesentlich aufwendiger gestaltet ist, hat die erfindungsgemäße Lösung den Vorteil, daß diese Baugruppen nunmehr nur noch an einem einzigen B-Holm, und zwar baulicher Einheit mit den Empfängerelementen E1, E2 untergebracht sein müssen.

Demgegenüber ist der Aufwand zur Ansteuerung der Senderelemente S1, S2 durch die Sendeelektronik deutlich niedriger. Somit ergeben sich Kostenvorteile sowohl hinsichtlich der Grundkosten der Ultraschall-Überwachungseinrichtung als auch hinsichtlich des Einbaus.

## Patentansprüche

1. Ultraschall-Überwachungseinrichtung zum Überwachen eines Kfz-Innenraums bestehend aus mindestens zwei Sende-(S1, S2) und mindestens zwei Empfangselementen (E1, E2) sowie einer Signalverarbeitungselektronik zur Ansteuerung der Sende- und Empfangselemente (S1, S2, E1, E2) und zur Auswertung der vom Innenraum reflektierten Signale, wobei die Sende- und Empfangselemente (S1, S2, E1, E2) jeweils im Bereich von B-Holmen des Kraftfahrzeuges angeordnet sind und die signaltechnisch einander zugeordneten Sende-(S1, S2) oder Empfangselemente (E1, E2) jeweils auf unterschiedlichen B-Holmen liegen,
**dadurch gekennzeichnet, daß** die mindestens zwei Empfangselemente (E1, E2) mit der empfangrelevanten Signalverarbeitungselektronik zu einer baulichen Einheit zusammengefaßt sind.

2. Ultraschall-Überwachungseinrichtung nach Anspruch 1,
**dadurch gekennzeichnet, daß** die mindestens zwei Sendeeinheiten zu einer weiteren baulichen Einheit zusammengefaßt sind.

3. Ultraschall-Überwachungseinrichtung nach Anspruch 1 oder 2,
**dadurch gekennzeichnet, daß** die Sendeelemente (S1, S2) synchron ansteuerbar sind.

4. Ultraschall-Überwachungseinrichtung nach Anspruch 1 oder 2,
**dadurch gekennzeichnet, daß** die Sendeelemente (S1, S2) voneinander getrennt steuerbar sind.
